# EUROPEAN PATENT SPECIFICATION

(11) **EP 2 216 971 B1**
(45) Date of publication and mention of the grant of the patent: **12.12.2012**
(21) Application number: 10164613.1
(22) Date of filing: 29.03.2007
(51) Int. Cl.: H04R 1/10, H04M 1/725, H04M 1/60

(54) **Mobile communication device with jack plug port**
Mobilkommunikationsendgerät mit Steckbuchsenanschluss
Appareil de communication mobile muni d'un port de connexion pour fiche de contact

(43) Date of publication of application: 11.08.2010
(62) Divisional of application: 07105171.8
(73) Proprietor: Research In Motion Limited, Waterloo, ON N2L 3W8 (CA)
(72) Inventor: Lowles, Robert, Waterloo Ontario N2T 2J5 (CA); Hui, Edward, Waterloo Ontario N2T 2J3 (CA); Mak-Fan, David, Waterloo Ontario N2K 4B1 (CA)
(74) Representative: Moore, Barry

(56) References cited:
- WO-A1-00/65803
- US-A1- 2003 083 114
- US-A1- 2005 221 859

## Description

The present invention relates generally to a mobile communication device. More particularly, the present invention relates to a mobile communication device adapted for use with a headset having a multi-button control and a standard headset jack.

When mobile communication devices were first developed, their main functionality was to provide a way for individuals to communicate with other individuals without the need for a landline. As the mobile communication device technology improved, further functionalities such as email, a contact database or a calendar were added. In the latest wave of mobile communication devices, new functionality such as an MP3 player and cameras have been added resulting in a multi-purpose mobile communication device.

In order for users to listen to an MP3 player, a headset is typically required which preferably includes a remote control so that the user is able to control the MP3 player within the mobile communication device. However, these headsets are typically individualized for each mobile communication device. Existing headsets include non-standard headset jacks which are then plugged into a corresponding slot within the unique mobile communication device. Therefore users are required to buy a specific headset which is dependent on the mobile communication device they are using.

Currently, headsets with standard jacks which are used with mobile communication devices have only a single button which is used to mute a call or to initiate voice activated dialing. Typically a single press, or a long press, can activate different functions. However, these single button controls can only provide two different control signals.

Alternatively, some headsets with multiple button controls are implemented with non-standard jacks and thusly, the mobile communication devices are required to be updated in order to be able to receive the non-standard jack. Therefore, additional hardware is required in each mobile communication device in order to receive the non-standard jack. Additional conductors are also required in each of the headsets.

US-A-2003/0083114, discloses a navigational control for a wireless computer resource access device. The control includes headphones and a multiple buttons. A connector secured to the body of the control connects the control to a wireless access device.

### GENERAL

In a preferred aspect there is provided a mobile communication device adapted for use with a headset having a microphone and a microphone wire connecting the microphone to a jack plug, said mobile communication device comprising:
a body defining a port sized and shaped for receiving a jack plug of the headset, and
a processor coupled to the port so as to receive a control signal transmitted via the microphone wire to the jack plug, and configured to execute a command in response to receipt of said control signal.

The headset may comprise a set of speakers, a microphone, a jack plug, a multi-button control, wires connecting the set of speakers, the microphone and the multi-button control to the jack plug, said multi-button control comprising a set of buttons and a controller connected to the buttons, wherein said controller detects depression of a button of said buttons and transmits a control signal via the wires to said jack plug.

The multi-button control is preferably capable of activating commands on the mobile communication device and may include:
a set of buttons, each representing one of said commands; and
a controller, connected to each button of said set of buttons;
and when said controller detects the depression of one of said buttons in said set of buttons, said controller determines which button was pressed and transmits a control signal to said headset jack plug corresponding to said button.

The multi-buttons control may be decoded by a microprocessor after which an encoded signal is then transmitted, via the microphone line from the processor to the handset. In this manner, by using the standard jack, no additional hardware is required in the handset. Only software to decode the signal on the microphone input may be required on the handset.

The controller may be a processor or an application specific integrated circuit (ASIC).
Furthermore, the control signal being transmitted may be encoded in an encoding control signal mode selected from a group consisting of a multiple presses control signal mode, a pulse train control signal mode, a unique frequency control signal mode, a dual tone multiple frequency (DTMF) control signal mode and a pulse width control signal mode.

The encoding control signal mode may comprise any of a multiple presses control signal mode, a pulse train control signal mode, a unique frequency control signal mode, a dual tone multiple frequency 'DTMF' control signal mode or a pulse width control signal mode.

The controller may further comprise: a database for storing control signal information associated with each of said set of buttons; and a module for associating said button depression with a control signal.

The control signal may be transmitted by said controller to a Field Effect Transistor 'FET' within said headset for transmission to said standard headset jack.

The multi-button control may further comprise a voltage divider.

The control signal may be transmitted to said standard headset jack via said voltage divider.

The headset may further comprise a battery for powering said controller.

The battery may comprise any of a rechargeable battery, a super capacitor or a one-time use battery.

In one embodiment, if said control signal mode is said multiple presses control signal mode, said pulse train control signal mode or said pulse width control signal mode, the headset further comprises a filter for limiting a slew rate of said control signal.

The filter may comprise an RC network.

The headset may comprise apparatus for indicating to said mobile communication device a presence of said multi-button control when said standard headset jack is received in said mobile communication device.

The controller may be powered by a microphone bias voltage supplied by said mobile communication device when said standard headset jack is received in said mobile communication device.

There is also provided below a mobile communication device as described above having connected thereto a headset.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Fig. 1 is a schematic diagram of a mobile communication device and headset;
Fig. 2 is a schematic diagram of circuitry for a headset;
Fig. 3 is a schematic diagram of circuitry for a headset in accordance with an embodiment;
Fig. 4 is a diagram of coding schemes for use with the headset;
Fig. 5 is a schematic diagram of circuitry for a headset in accordance with another embodiment; and
Fig. 6 is a flowchart outlining a method of headset use.

### DESCRIPTION OF PREFERRED EMBODIMENTS

Generally, the present embodiment provides a method and system for a headset for a mobile communication device. The headset includes a multi-button control and uses a standard jack for connecting to the mobile communication device.

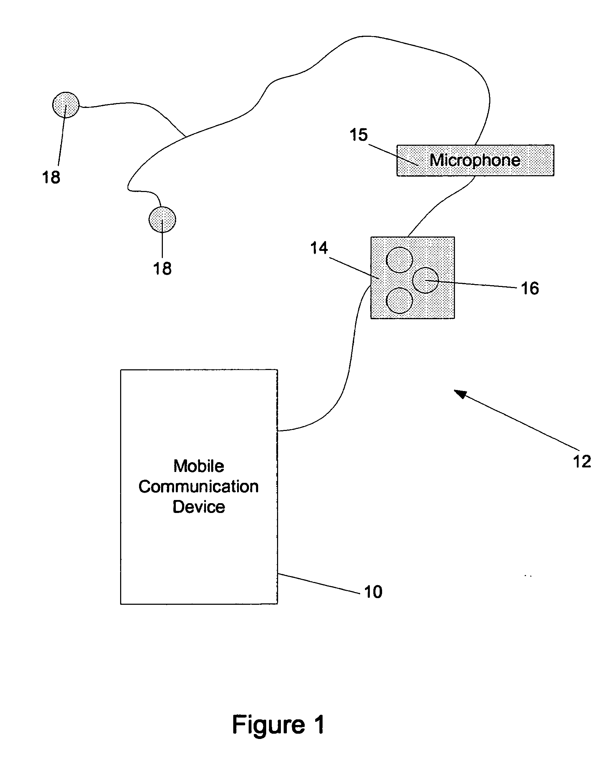

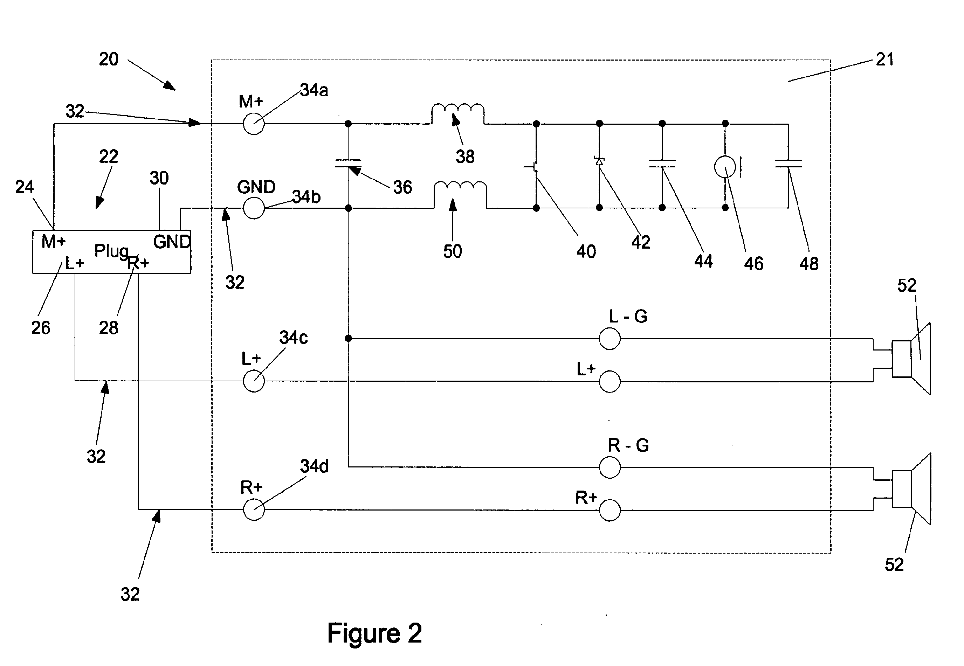

Turning to Figure 1, a schematic diagram of a mobile communication device, or handset, **10** having a headset **12** thereby connected is provided. The headset **12** further comprises a multiple button controller **14** having a plurality of buttons **16**. The number of buttons is theoretically limitless however, the number is dictated by the size of the controller **14**. The headset **12** further includes at least one ear bud **18** each housing a speaker (as shown in Figure 2). The headset **12** is connected to the mobile communication device **10** via standard jack. A microphone **15** is also included in the headset **12.**
Turning to Figure 2, circuitry **20**, typically mounted to a printed circuit board assembly **21**, for a standard headset **12** is shown. The headset **12** includes a standard jack, or plug, **22** for connecting the headset to the handset. The plug **22** comprises a microphone portion **24,** a left speaker portion **26,** a right speaker portion **28** and a ground portion **30.** The jack **22** is connected to the circuitry **20** via a plurality of wires **32.**

In the current embodiment, the circuitry **20** comprises a set of connectors **34** for receiving the wires **32** from their corresponding locations within the jack **22.** The microphone connector **34a** is connected to a first capacitor **36** and an inductor **38.** An output of the inductor **38** is connected to plurality of elements connected in parallel. The plurality of elements includes a switch **40,** a zener diode **42,** a second capacitor **44,** a microphone **46** and a third capacitor **48.** A second inductor **50** is located between the ground connector **34b** and the output of the parallel elements. The output from the second inductor **50** is connected to ground along with one side of a pair of speakers **52.** The left speaker portion connector **34c** and the right speaker portion connector **34d** are also connected to their respective, left and right speakers **52.** As will be understood, the speakers are typically located within the ear buds **18** of the headset **12** which are then inserted into a user's ears so that they may listen of the output from the mobile communication device.

In operation, the zener diode **42** is used to control the electrostatic discharge (ESD) which may be experienced within the headset **12.** The inductor 38 and the first capacitor **36** provide a wide band filter for the various General Packet radio Services (GPRS) bands. This filter reduces and/or prevents the headset from picking up and transmitting GSM pulses via the microphone line. This is also known as GSM buzz. Finally, the switch **40** shorts out the microphone bias current which is detected by the handset as a signal.

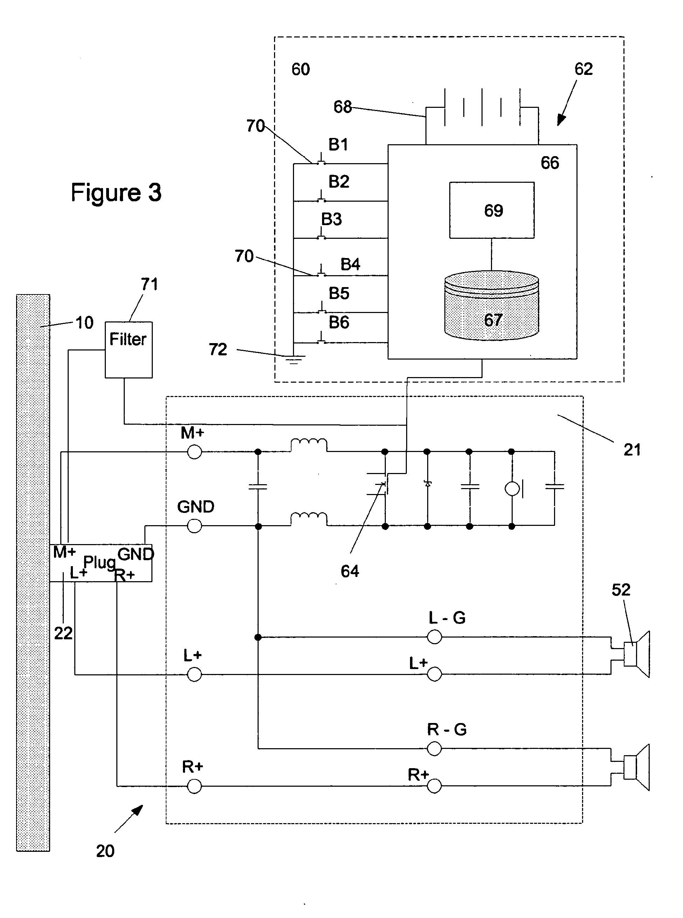

Turning to Figure 3, a schematic diagram of an embodiment of a headset **12** having a multi-button control **60** in accordance with one embodiment is shown. In each of the embodiments, the headset **12** is implemented with the standard headset jack **22** for connection with the mobile communication device **10.** In this embodiment, the circuitry **62** for implementing the multi-button control **60** is shown connected to the standard headset circuitry **20** of Figure 2 with one substitution. The switch **40** is replaced with a Field-Effect Transistor (FET) **64.** The implementation of the multi-button control using a standard headset and standard jack provides the benefit that mobile communication devices do not have to be altered in order to operate with the headset. In this manner, since the mobile communication device does not have to be updated to include extra hardware to receive the headset jack, the mobile communication device may be able to receive the headset disclosed herein or existing headsets with standard jacks and one control button.

Therefore, in order for the handset to recognize which type of headset has been connected, the handset preferably includes circuitry to make this determination. In one embodiment, when the headset detects a microphone bias voltage, a predetermined signal may be transmitted by the headset to be decoded by the handset. This may be implemented by simply connecting an output of a controller **66** to the microphone portion of the plug output of the processor. A filter network 71 may also be located along this connection in order to reduce noise.

The circuitry **62** includes the controller **66,** such as a processor, preferably having low power consumption and a battery **68.** The battery **68** is preferably a rechargeable battery or a super capacitor which may be charged by a microphone bias when the headset is connected to the mobile communication device. If a microphone bias is used, a voltage boost circuit is likely to be required to boost the voltage on the microphone bias to above 1.8 V. Alternatively, the battery may be a one-time use battery and replaced when the power has been entirely discharged from the battery **68.**

A series of switches **70,** representing each button on the multi-button control, is connected to the processor **66.** In Figure 3, the switches **70** have been labeled as B1, B2, B3, B4, B5 and B6. For instance, B1 may represent a mute button, B2 may represent a volume up button, B3 may represent a volume down button, B4 may represent a rewind button, B5 may represent a fast forward button and B6 may represent a play/stop button. As will be understood, the number of switches is limitless but is dependent on the physical size of the multi-button control. Each of the switches is also connected to ground **72.** Within the processor is a memory, or database **67,** for storing control information and a module **69** for determining which switch **70** has been pressed.

In the present embodiment, an output of the processor **66** is connected to the FET **64.** As will be described below with respect to the operation of the control **60,** this connection provides the necessary signals to control the handset.

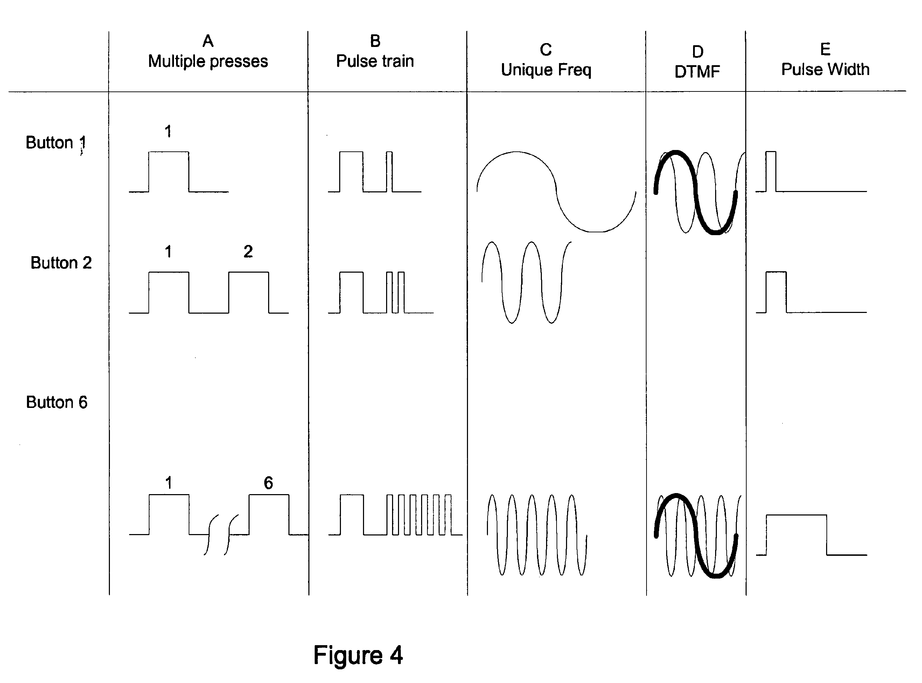

Figure 4 provides examples of various methods of encoding the control signals being transmitted from the headset to the handset. Encoding control signal mode A is directed at multiple presses, encoding control signal mode B is directed at pulse trains, encoding control signal mode C is directed at unique frequencies, encoding control signal mode D is directed a dual tone multiple frequency (DTMF) and encoding control signal mode E is directed at pulse width. It will be understood that each headset preferably operates in only one of the encoding control signal modes but in some embodiments, the headset may operate under multiple control signal modes depending on the required functionality.

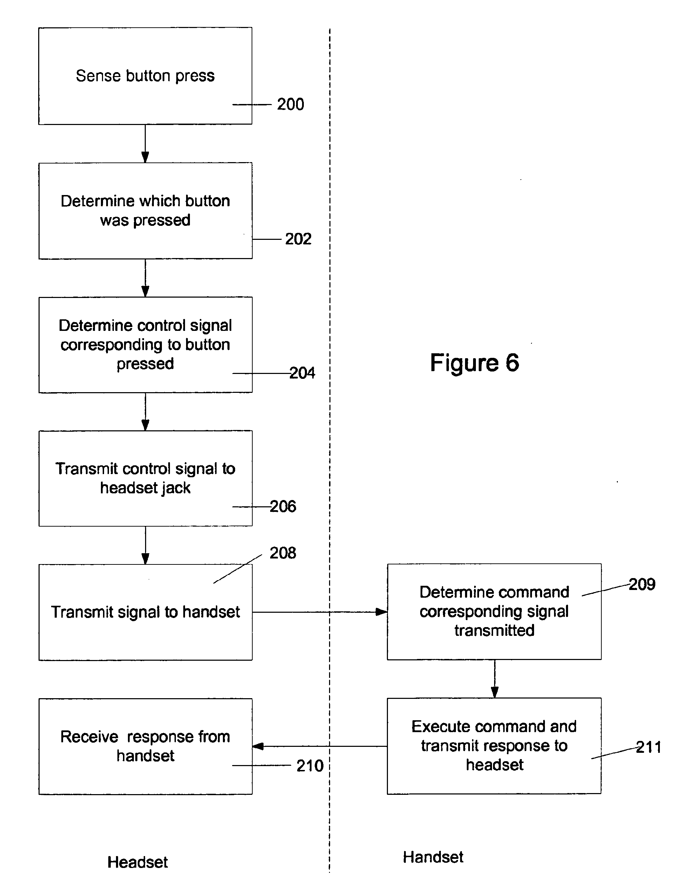

In this embodiment, the circuitry is implemented for a multi-button control **60** operating under control signal mode A, control signal mode B or control signal mode E, as shown in Figure 4. As will be understood, each headset preferably operates in a single control signal mode. However, it will be understood that some embodiments may employ multiple control signal modes. When one of the series of switches **70,** or buttons, is pushed, a signal is transmitted to the processor **66** from the switch. The module **69** within the processor **66** receives this signal (step **200** of Figure 6) and then determines which of the switches **70** has been pressed (step **202).** After determining the switch, the module then accesses the database **67** to determine a control signal corresponding to or associated with the pressed switch **70** (step **204).**

For instance, if the user wishes to play music, after pressing B6, the software module **69** determines B6 was pressed and accesses the database/memory **67** to determine the signal that needs to be transmitted from the multi-button control to play music.

As shown in Figure 4, the signal corresponding to B6 for mode A, is a series of 6 pulses. The pulses are then transmitted from the processor **66** to the FET **64.** The pulses are recognized by the FET **64** which then translates this pulse signal to the jack **22** (step **206)** by shorting out the microphone to ground. The jack **22** then transmits this information to the handset (step **208)** which receives the pulse signal. A processor within the handset then processes the pulse signal to determine the command corresponding to the signal transmitted (step **209).** In this example, the processor determines that a play music command has been issued and then executes the command and transmits the response to the headset (step **211**). Therefore, in this example, the mobile communication device plays music which is then transmitted back through the jack **22** to the headset which then receives the response and transmits the music to the speakers (step **210).**

The user is then able to enjoy listening to music on their headset. Similarly, if music is already playing, the user may choose to stop the music, turn the volume up or down by pressing the relevant button. As before, the method outlined in Figure 6 is performed to transmit the necessary signal to the handset to have the command be performed.

In an alternative embodiment, for instance if the multiple button control was operating in encoding control signal mode B, using a pulse train, the nature of the signals being transmitted from the processor to the headset are shown in Figure 4. A start pulse is typically transmitted to the FET indicating that a button has been pressed. The start pulse is then followed up with a series of pulses corresponding to the button number that was pressed. For instance if B1 is pressed, a single pulse is provided after the start pulse, if B2 is pressed, two pulses are provided. Similar pulse streams are provided for buttons B3, B4, B5 and B6.

In a more specific example, the start pulse may be a 20ms pulse with a 10ms break before the transmission of the stream of control signal pulses, each pulse lasting for 1 ms.

In another embodiment, when square wave pulses are used, the circuitry further includes a set of electronic elements which limit the slew rate of the square wave pulse in order to reduce the potential of the buttons from being heard in the audio transmitted to the speakers. In one embodiment, this may be implemented by adding a resistor/capacitor (RC) network between the FET and the processor **66.** Finer slew rate control may be implemented by standard pulse width modulation (PWM) methods.

The pulse train is then transmitted from the FET to the headset **10** via the jack **22.** The processor within the headset **10** recognizes the start pulse and processes the following series of pulses to determine which button is pressed. After determining the command from the control, the mobile communication proceeds to execute the demand and the result is transmitted to the user via the speakers.

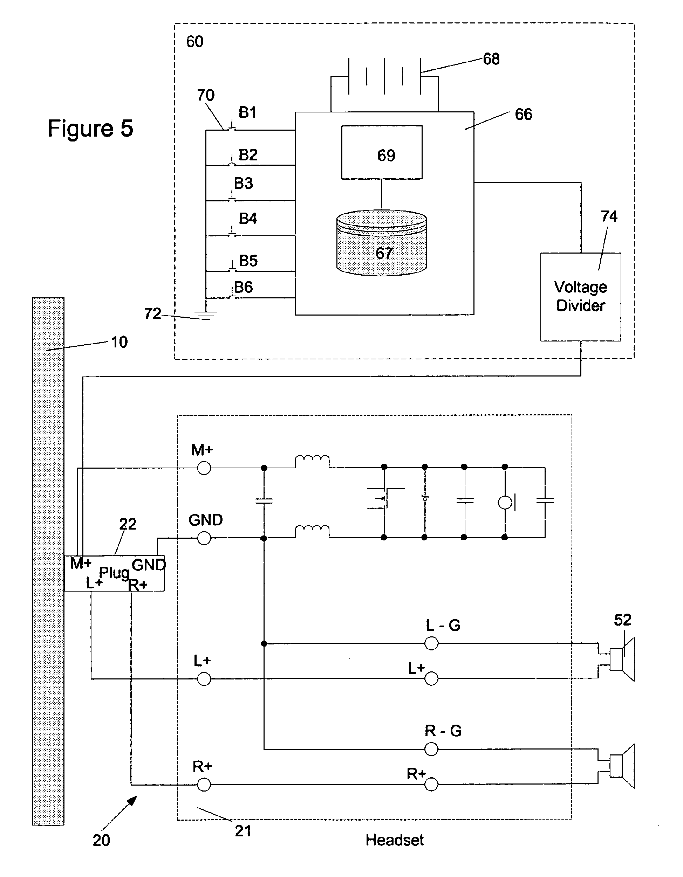

Turning to Figure 5, a second embodiment of a multiple button control **14** for a mobile communication device **10** is shown. In this embodiment, the output of the processor is directed connected directly to the jack **22,** however the output is transmitted through a voltage divider **74** which is used to ensure that the signal being transmitted to the jack is at a predetermined level comparable to the microphone output. Operation of the embodiment is in an identical manner with respect to the method outlined in Figure 6. However, the nature of the signals being transmitted by the processor differs. In this embodiment, when operating in Mode C, the control signals are transmitted at different frequencies such that the jack transmits the signal to the headset which deciphers the frequency and then performs the requested task. In an alternative embodiment, the output of the processor may also be connected to the FET **64.**

In one implementation, if B1 is pressed, the processor **66** transmits a signal at 3400Hz which is then received by the handset **10** via the jack **22.** Once the handset receives a signal at 3400Hz, the processor recognizes that B1 has been pressed. Similarly, if B2 is pressed, a signal is transmitted at 3600Hz to the mobile communication device. In order to prevent any interference, each of the frequencies which are selected and associated with the buttons are outside of the audible range so the user does not experience any interference or distraction.

The battery **68** allows the control to be self-sufficient and does not drain the battery within the mobile communication device. Therefore by utilizing a low power processor, the life of the battery **68** is prolonged and does not have to be changed on a constant basis. The importance of the battery is that no additional connection is required from the handset to provide power to the processor in the headset.

If the headset is operating under Mode D, the signals are selected and differentiated using DTMF.

In an alternative embodiment, the processor **66** may be replaced by an Application Specific Integrated Circuit (ASIC) to lower cost, power consumption and size of the control **16.**

In an alternative embodiment, where multiple encoding control signal modes are combined, different functionalities may be provided which are controlled via separate control signal modes. For instance Mode A may be used to control an MP3 player while Mode B may be used as a joystick to play a game on the mobile communication device. In this embodiment, the multiple button control includes a switch or control to determine which mode the headset is operating in order to ensure that the encoding is performed correctly by the processor **66.** Another embodiment may include the controller **16** being used as a multi-media control in one mode and as a phone dialer in a second mode.

The embodiment having multiple encoding control signal modes may also allow the headset to have a more universal use in that different handsets may require specific encoding control signal modes.

Alternatively, mobile communication devices may operate currently under one mode but in future implementations, may operate under a second mode. In this manner, the headset may be used for both the currently and future versions of a mobile communication device provide more flexibility to the user.

In the preceding description, for purposes of explanation, numerous details are set forth in order to provide a thorough understanding of the embodiments of a novel headset. However, it will be apparent to one skilled in the art that these specific details are not required in order to practice the invention. In other instances, well-known electrical structures and circuits are shown in block diagram form in order not to obscure the invention. For example, specific details are not provided as to whether the embodiments of the invention described herein are implemented as a software routine, hardware circuit, firmware, or a combination thereof.

The above-described embodiments of the invention are intended to be examples only. Alterations, modifications and variations can be effected to the particular embodiments by those of skill in the art without departing from the scope of the invention, which is defined solely by the claims appended hereto.

## Claims

1. A mobile communication device (10) adapted for use with a headset (12) having a microphone (15) and a microphone wire (32) connecting the microphone (15) to a standard jack plug (22), said mobile communication device (10) comprising:
a body defining a port sized and shaped for receiving the standard jack plug (22) of the headset, and
a processor coupled to the port so as to receive a control signal transmitted via the microphone wire (32) to the standard jack plug (22), and configured to execute a command in response to receipt of said control signal.

2. The mobile communication device (10) as claimed in claim 1, wherein said control signal is encoded in an encoding control signal mode.

3. The mobile communication device (10) as claimed in claim 2, wherein said control signal is selected from a group consisting of a multiple presses control signal, a pulse train control signal, a unique frequency control signal, a dual tone multiple frequency (DTMF) control signal and a pulse width control signal.

4. The mobile communication device (10) as claimed in any preceding claim, wherein said command comprises adjusting an audio signal transmitted to the headset.

5. The mobile communication device (10) as claimed in any preceding claim, wherein said command comprises one of mute, volume up, volume down, rewind, fast forward and play/stop.

6. The mobile communication device (10) as claimed in any preceding claim, further comprising electrical circuitry coupled to the port and configured to detect the type of headset connected to the port by receiving a predetermined signal transmitted by the headset after the headset receives a microphone bias voltage from the mobile communication device.

7. The mobile communication device (10) as claimed in any preceding claim, wherein said control signal comprises a predetermined signal transmitted by the headset.

8. A computer readable medium bearing code which when executed by a processor of a mobile communication device having a body defining a port sized and shaped for receiving a standard jack plug causes the device to behave as a device according to any preceding claim.

## Patentansprüche

1. Eine mobile Kommunikationsvorrichtung (10), die ausgebildet ist zur Verwendung mit einem Headset (12) mit einem Mikrofon (15) und einem Mikrofonkabel (32), das das Mikrofon (15) mit einem Standard-Klinkenstecker (22) verbindet, wobei die mobile Kommunikationsvorrichtung (10) aufweist:
ein Gehäuse, das einen Anschluss definiert, der eine Größe hat und geformt ist zur Aufnahme des Standard-Klinkensteckers (22) des Headsets, und
einen Prozessor, der mit dem Anschluss gekoppelt ist, um ein Steuersignal zu empfangen, das über das Mikrofonkabel (32) an den Standard-Klinkenstecker (22) übertragen wird, und konfiguriert ist zum Ausführen eines Befehls in Reaktion auf den Empfang des Steuersignals.

2. Die mobile Kommunikationsvorrichtung (10) gemäß Anspruch 1, wobei das Steuersignal in einem Codierungssteuersignalmodus codiert ist.

3. Die mobile Kommunikationsvorrichtung (10) gemäß Anspruch 2, wobei das Steuersignal aus einer Gruppe ausgewählt ist, die besteht aus einem Mehrfachdruck-Steuersignal, einem Impulsfolge-Steuersignal, einem "eindeutige Frequenz"-Steuersignal, einem Doppelton-Mehrfrequenz(DTMF - dual tone multiple frequency)-Steuersignal und einem Impulsbreite-Steuersignal.

4. Die mobile Kommunikationsvorrichtung (10) gemäß einem vorhergehenden Anspruch, wobei der Befehl ein Einstellen eines Audiosignals aufweist, das an das Headset übertragen wird.

5. Die mobile Kommunikationsvorrichtung (10) gemäß einem vorhergehenden Anspruch, wobei der Befehl eines aufweist aus stumm, lauter, leiser, zurückspulen, vorspulen und Wiedergabe/Stopp.

6. Die mobile Kommunikationsvorrichtung (10) gemäß einem vorhergehenden Anspruch, die weiter elektrische Schaltungen aufweist, die mit dem Anschluss gekoppelt sind und konfiguriert sind, den Typ des Headsets zu erfassen, das mit dem Anschluss verbunden ist, durch Empfangen eines vorgegebenen Signals, das von dem Headset übertragen wird, nachdem das Headset eine Mikrofon-Bias-Spannung von der mobilen Kommunikationsvorrichtung empfängt.

7. Die mobile Kommunikationsvorrichtung (10) gemäß einem vorhergehenden Anspruch, wobei das Steuersignal ein vorgegebenes Signal aufweist, das von dem Headset übertragen wird.

8. Ein computerlesbares Medium, das Code enthält, der bei Ausführung durch einen Prozessor einer mobilen Kommunikationsvorrichtung, die ein Gehäuse hat, das einen Anschluss definiert, der eine Größe hat und geformt ist zur Aufnahme eines Standard-Klinkensteckers, die Vorrichtung veranlasst zum Verhalten als eine Vorrichtung gemäß einem vorhergehenden Anspruch.

## Revendications

1. Dispositif de communication mobile (10) conçu pour être utilisé avec un casque (12) comportant un microphone (15) et un fil de microphone (32) reliant le microphone (15) à une fiche mâle standard (22), ledit dispositif de communication mobile (10) comprenant :
un corps définissant un port d'une taille et d'une forme conçues pour recevoir la fiche mâle standard (22) du casque ; et
un processeur couplé au port afin de recevoir un signal de commande transmis par le fil de microphone (32) vers la fiche mâle standard (22) et configuré pour exécuter une instruction en réponse à la réception dudit signal de commande.

2. Dispositif de communication mobile (10) selon la revendication 1, dans lequel ledit signal de commande est codé dans un mode de codage de signal de commande.

3. Dispositif de communication mobile (10) selon la revendication 2, dans lequel ledit signal de commande est sélectionné dans un groupe comprenant : un signal de commande à pressions multiples, un signal de commande à train d'impulsions, un signal de commande à fréquence unique, un signal de commande multifréquence à deux tonalités (DTMF) et un signal de commande à largeur d'impulsions.

4. Dispositif de communication mobile (10) selon l'une quelconque des revendications précédentes, dans lequel ladite instruction comprend l'ajustement d'un signal audio transmis au casque.

5. Dispositif de communication mobile (10) selon l'une quelconque des revendications précédentes, dans lequel ladite instruction comprend l'une des suivantes : coupure du son, augmentation du volume, réduction du volume, rembobinage, avance rapide et lecture/arrêt.

6. Dispositif de communication mobile (10) selon l'une quelconque des revendications précédentes, comprenant en outre des circuits électriques couplés au port et configurés pour détecter le type de casque connecté au port en recevant un signal prédéterminé transmis par le casque après que le casque a reçu une tension de polarisation du microphone transmis par le dispositif de communication mobile.

7. Dispositif de communication mobile (10) selon l'une quelconque des revendications précédentes, dans lequel ledit signal de commande comprend un signal prédéterminé transmis par le casque.

8. Support lisible par ordinateur, portant du code qui, lorsqu'il est exécuté par un processeur d'un dispositif de communication mobile possédant un corps qui définit un port d'une taille et d'une forme conçues pour recevoir une fiche mâle standard, commande au dispositif de se comporter comme un dispositif selon l'une quelconque des revendications précédentes.
